Europäisches Patentamt

European Patent Office

Office européen des brevets

(11) Publication number: **0 087 316**
**A1**

## (12) EUROPEAN PATENT APPLICATION

(21) Application number: **83300923.6**

(22) Date of filing: **22.02.83**

(51) Int. Cl.³: **F 02 B 37/14**

(30) Priority: **22.02.82 GB 8205201**

(43) Date of publication of application:
**31.08.83 Bulletin 83/35**

(84) Designated Contracting States:
**AT BE CH DE FR GB IT LI LU NL SE**

(71) Applicant: **BRITISH SHIPBUILDERS (ENGINEERING AND TECHNICAL SERVICES) LIMITED**
**P.O. Box 25 Pallion**
**Sunderland Tyne and Wear SR4 6TG(GB)**

(72) Inventor: **Orbeck, Finn**
**5 The Cedars**
**Sunderland SR2 TTW Tyne and Wear(GB)**

(74) Representative: **Mayes, Stuart David et al,**
**BOULT, WADE & TENNANT 27 Furnival Street**
**London, EC4A 1PQ(GB)**

(54) Auxiliary drive system for exhaust gas driven turbochargers and internal combustion engines having the drive system.

(57) The invention relates to an auxiliary drive system for exhaust gas driven turbochargers of internal combustion engines.

An auxiliary drive system comprises a hydraulic motor (1) driving the turbocharger rotor or rotors through a clutch (22) which is engaged when the motor drives the rotor and disengaged when the rotor runs faster than the motor. The motor is supplied with oil from a hydraulic pump (21) which may be driven either by an electric motor or directly by the internal combustion engine (25).

A particular embodiment concerns the use of the auxiliary drive system with a large diesel engine.

*FIG. 3.*

AUXILIARY DRIVE SYSTEM FOR EXHAUST GAS DRIVEN TURBOCHARGERS
AND INTERNAL COMBUSTION ENGINES HAVING THE DRIVE SYSTEM

The present invention relates to a turbocharger drive and acceleration system for internal combustion engines, more particularly but not exclusively large diesel engines.

Many reciprocating engines can benefit from improved acceleration characteristics and it is not uncommon that improved full power performance is obtained at the expense of acceleration or vice versa. An engine's ability to accept a rapid increase in load is important for power generation purposes and for traction and marine purposes light load performance and acceleration capabilities are important. The introduction of constant pressure turbo-charging, a system which is simple and gives significant full power improvement, unfortunately brought with it poorer light load characteristics as inadequate energy is available for the turbocharger to provide the engine with sufficient air. This can result in poor combustion and smoke during slow running and acceleration.

According to the invention there is provided an auxiliary drive system for exhaust gas driven turbochargers for internal combustion engines which drive system comprises a hydraulic drive means driving at least one turbocharger rotor and means for engaging and disengaging the hydraulic drive means and the turbocharger rotor or rotors, the system being arranged such that the hydraulic drive means and the turbocharger rotor or rotors are engaged when the drive means drives the rotor or rotors and disengaged when the rotor or rotors run faster than the drive means.

Preferably the hydraulic drive means comprises a hydraulic motor supplied with oil from a hydraulic pump.

Preferably, the means for engaging and disengaging the hydraulic drive means comprises a clutch.

The hydraulic motor may be of the axial piston type.

The hydraulic pump may be mounted separately from the engine in a power supply module which may also comprise an electric motor to drive the pump, an oil supply tank and an oil cooler.

Alternatively, the hydraulic pump may be mounted on the engine and driven via a gear train by the engine, in which case the gear train and the swept volume of the pump are arranged to give the desired speeds of the hydraulic motor from the given engine speeds.

In the case where the pump is driven by an electric motor the pump may be both pressure controlled to avoid excess pressures and power controlled to avoid overloading the electric motor.

Alternatively, in the case where the pump is driven by the engine, the pump is pressure controlled.

Preferably, the hydraulic pump is of the axial piston variable delivery type.

Preferably, a coupling means is provided between the engagement means and the turbocharger rotor or rotors.

The coupling means may be a gear coupling which preferably allows for both angular and lateral misalignment in the coupling.

The invention also provides an internal combustion engine with exhaust gas driven turbochargers having an auxiliary drive system for the exhaust gas driven turbochargers as defined above.

By way of example, specific embodiments in accordance with the invention will be described with reference to the accompanying drawings in which:-

Figure 1 shows a vertical section of a hydraulic motor drive;

Figure 2 shows a diagrammatic arrangement of a control system applied to the hydraulic motor drive shown in Figure 1; and

Figure 3 illustrates an alternative control system having a different drive arrangement for the hydraulic pump which supplies oil to the hydraulic motor.

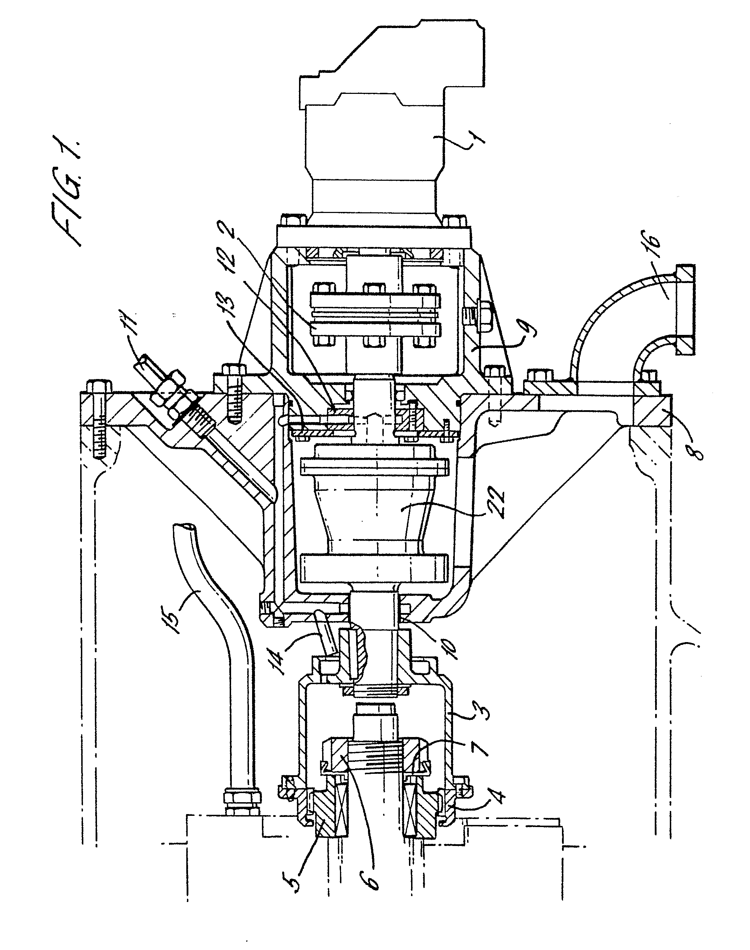

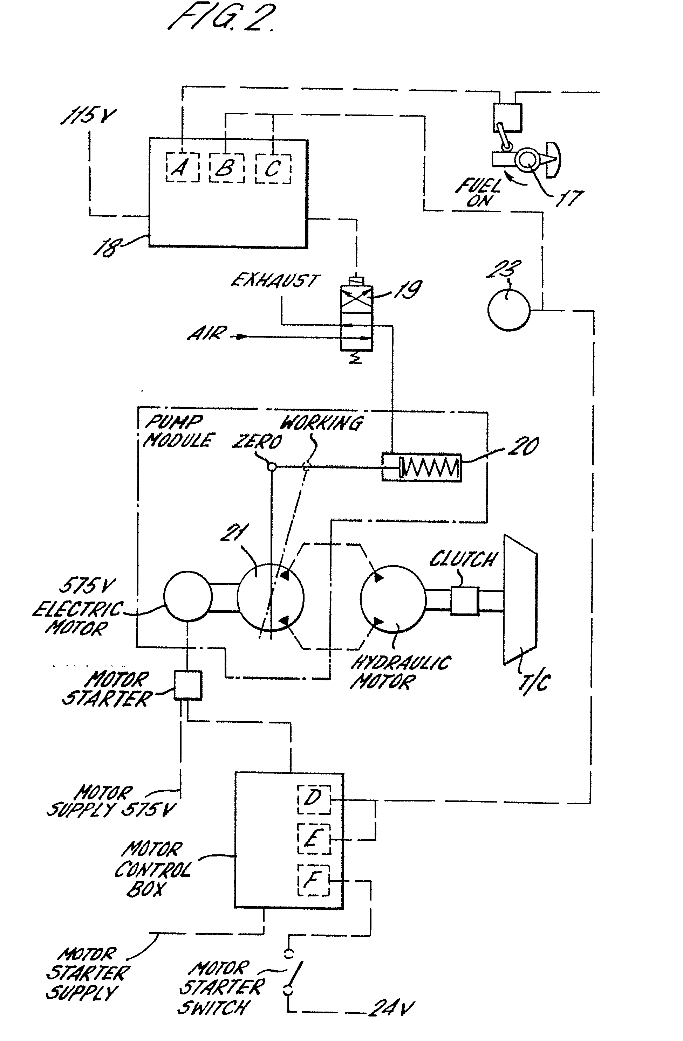

Regarding Figures 1 and 2, a hydraulic motor 1 of an axial piston type is connected through a flexible coupling 2 to an input shaft of a clutch 22. The motor, the flexible coupling and the clutch are of proprietary make. A drive sleeve 3 for a gear coupling is keyed on to an output shaft from the clutch 22. This drive sleeve is in turn bolted to a toothed driver 4 which engages with a driving hub 5. The driving hub is keyed to a turbocharger rotor with keys, which are used as a locking tool for locking the turbocharger rotor, and held in place by a nut 6 and a locking washer 7. The gear coupling 4, 5 allows for any angular and lateral misalignment in the coupling. The motor 1 and the clutch 22 are in this case supported by an assembly comprising a cover plate 8 and a motor carrier 9.

The clutch input shaft is supported radially by the flexible coupling 2 and located radially relative to the output shaft by a sleeve bearing inside the clutch. The clutch output shaft is supported in a bearing 10 and located radially to the turbocharger rotor. This bearing arrangement allows adequately for misalignment and gives improved margin against whirling. Thermal expansion of the turbocharger rotor will be allowed for by movement between the toothed driver and the driving hub. The clutch output shaft is located axially to the input shaft by a thrust bearing inside the clutch 22 and the clutch input shaft is located axially to the motor shaft by the flexible coupling. The motor shaft is located in conical roller bearings.

The clutch 22 and the bearings are lubricated with engine crankcase oil supplied through a pipe 11. The oil is taken to the clutch through a floating ring 12, which is held in position by a retaining ring 13, and then through the clutch input shaft. Oil is also supplied to the bearing 10 through holes in the cover plate and to the gear coupling through a pipe 14. A pipe 15 is provided for supplying oil to the turbocharger bearing and a drain 16 is provided for the turbocharger sump.

The hydraulic motor 1 is supplied with oil from a hydraulic pump 21 which is of the axial piston variable delivery type. The control system shown in Figure 2 integrates the control of the hydraulic pump module with the main engine control. Starting on "Automatic" will first be described.

Prior to starting the engine, an electric motor which drives the hydraulic pump is started, with a pump swash plate in zero position i.e. no pump output, and allowed to run up to full speed. The engine is now started. During the starting procedure a timing valve shaft 17 will move up to a position for running. A lever on this shaft will switch on a switch to supply a signal to an air cylinder control box 18 which in turn supplies a 115 volt signal to an air cylinder control valve 19. The valve 19 will open and admit air to an air cylinder 20 which will move the swash plate control lever on the hydraulic pump 21 to the working position. The working position for this lever is its maximum position. The pump 21, which is pressure controlled to avoid excess pressures and power controlled to avoid overloading the electric motor, will now deliver oil to the motor at the maximum permissible pressure and the motor will start.

As the motor accelerates the turbocharger rotor, the flow of oil will increase and the power absorbed by the pump will therefore also increase. When this power reaches the limit imposed by the electric motor, a power control in the pump will come into operation and limit the power for further speed increase of the motor and the pressure will drop as the speed increases.

In this example the hydraulic motor drives the turbocharger rotor at about 2400 revs/min when the engine is idling. When the engine accelerates up to a higher power, the turbocharger turbine will receive more exhaust gas energy and the turbocharger will accelerate. The speed of the turbocharger is measured with a tacho generator 23. When the turbocharger reaches approximately 4000 revs/min, the hydraulic pump will reach its maximum flow and the hydraulic motor its maximum speed. The clutch will therefore disconnect the turbocharger rotor from the motor. When the turbocharger reaches approximately 4300 revs/min, the signal is removed from the air cylinder 20 and the swash plate in the pump returns to the zero position under the action of a spring in the cylinder 20. The electric motor is switched off via a timer when the turbocharger exceeds 4500 revs/min.

When slowing the engine down the reverse will happen.

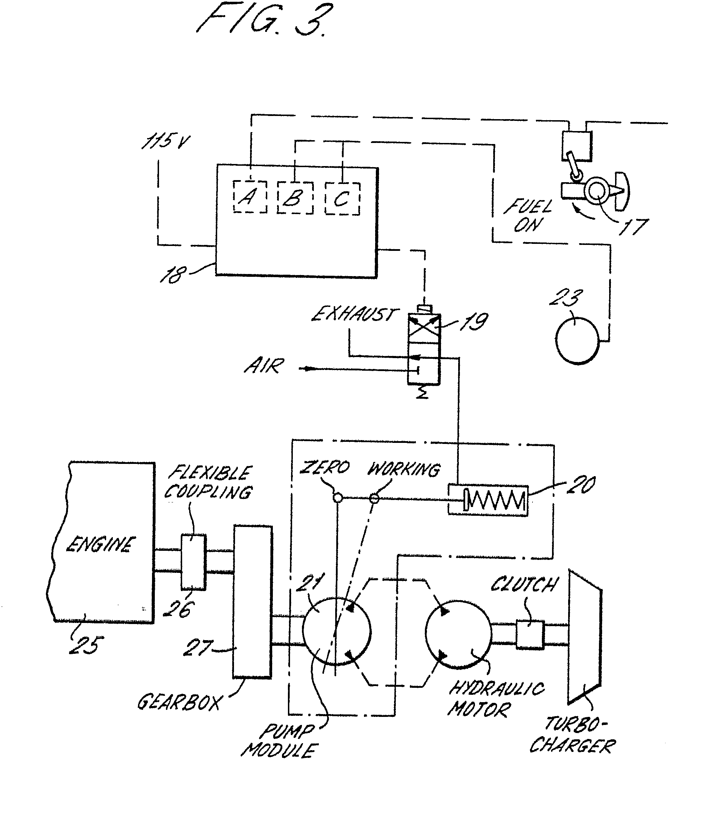

Figure 3 illustrates an alternative embodiment in which the hydraulic pump 21 is mounted on the engine 25 and driven by the engine via a flexible coupling 26 and a gear train 27. Depending on the swept volume of the pump the gear train may not be required. The requirement of the coupling is determined by alignment and torsional vibrations. In this case the gear train and the swept volume of the pump are arranged to give the desired speeds of the hydraulic motor 1 from the given engine speeds. The pump is also pressure controlled to avoid excess pressures.

In operation the hydraulic pump 21 is driven when the engine 25 is turned on air. When the engine is given fuel, the timing shaft 17 will turn and the swash plate in the pump 21 will be rotated to the maximum position. Subsequent operation is identical to the electrically driven system of the first embodiment.

The advantages of the hydraulic motor when used for the particular application described in the above described embodiments of the invention are compactness, low inertia, high maximum speeds and simple and improved speed control. The compactness and low inertia makes it possible to design a drive system which can be mounted on the turbocharger and hardly affect the dynamic characteristics, i.e. whirling and torsional vibration, of the turbocharger rotor when the system is connected to it through the clutch. When the clutch is disconnected only a part of the gear coupling is supported by the turbocharger rotor and its effect on the whirling characteristics of the turbocharger rotor is negligible.

A further advantage is that the speed and power characteristics of the hydraulic motors are such that the motors can contribute the required power assistance over the required speed range, and thus the hydraulic system can be almost ideally matched to a wide range of turbochargers.

Most turbochargers used for marine applications have an arrangement for locking the rotor and this arrangement is used if the machine has been damaged and the rotor must be locked until repair can take place. Another advantage of each embodiment described above is that the hydraulic accelerating system can be connected to the turbocharger rotor in place of this locking arrangement and no machining of the rotor itself is therefore required.

Yet another advantage is that the system can be applied to all common types of turbochargers, i.e. with inboard and outboard bearings, plain or rolling element bearings.

Additional advantages of the pump control system described with regard to Figure 3 are that the arrangement is simple and that since the power is derived from the engine, the auxiliary power requirements which, for example in a ship, are largest during manoeuvring, will be reduced. This can lead to savings in the size of the auxiliary engines.

CLAIMS

1. An auxiliary drive system for exhaust gas driven turbochargers for internal combustion engines which drive system is characterised by a hydraulic drive means driving at least one turbocharger rotor and means (22) for engaging and disengaging the hydraulic drive means (1) and the turbocharger rotor or rotors, such that the drive means and the turbocharger rotor or rotors are engaged when the drive means drives the rotor or rotors and disengaged when the rotor or rotors run faster than the drive means.

2. An auxiliary drive system as claimed in Claim 1, characterised in that the means for engaging and disengaging the hydraulic drive means comprises a clutch (22).

3. An auxiliary drive system as claimed in Claim 1 or Claim 2, characterised in that the hydraulic drive means comprises a hydraulic motor (1) supplied with oil from a hydraulic pump (21).

4. An auxiliary drive system as claimed in Claim 3, characterised in that the hydraulic motor (1) is of an axial piston type.

5. An auxiliary drive system as claimed in Claim 3 or Claim 4, characterised in that the hydraulic pump (21) is mounted separately from the engine in a power supply module and driven by an electric motor.

6. An auxiliary drive system as claimed in Claim 3 or Claim 4, characterised in that the hydraulic pump (21) is mounted on and driven by the engine (25).

7. An auxiliary drive system as claimed in Claim 6, characterised in that the pump (21) is pressure controlled to avoid excess pressures.

8. An auxiliary drive system as claimed in Claim 5, characterised in that the pump (21) is both pressure controlled to avoid excess pressures and power controlled to avoid overloading the electric motor.

9. An auxiliary drive system as claimed in any one of Claims 3 to 8, characterised in that the hydraulic pump (21) is of the axial piston variable delivery type.

10. An auxiliary drive system as claimed in any one of the preceding claims, characterised in that a coupling means (4,5) is provided between the engagement means (22) and the turbocharger rotor or rotors.

11. An auxiliary drive system as claimed in Claim 10, characterised in that the coupling means is a gear coupling (4,5).

12. An auxiliary drive system as claimed in Claim 11, characterised in that the gear coupling (4,5) allows for both angular and lateral misalignment in the coupling.

13. An internal combustion engine with exhaust gas driven turbochargers having an auxiliary drive system for the exhaust gas driven turbochargers as claimed in any one of the preceding claims.

FIG.1.

FIG. 2.

0087316

2/3

FIG. 3.

## European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A- 488 396 (MAN) <br> * Page 2, line 58 - page 3, line 73; figures 1-3 * | 1-3,6 | F 02 B 37/14 |
| Y | GB-A-1 189 829 (SULZER) <br><br> * Page 1, line 67 - page 2, line 54; figure 1 * | 1,3,5-7 | |
| Y | FR-A- 918 543 (BRANDT) <br> * Page 3, line 92 - page 4, line 56; figure 1 * | 1-3,6 | |
| Y | DE-A-3 008 181 (BOSCH) <br><br> * Page 6, line 2 - page 7, line 3; figure 1 * | 1,3,6, 7 | |
| Y | US-A-2 803 942 (JOHANSSON) <br> * Column 1, line 57 - column 3, line 22; figure 1 * | 1,2 | TECHNICAL FIELDS SEARCHED (Int. Cl. ³) <br><br> F 02 B |
| A | DE-A-1 966 223 (SAVIEM) <br><br> * Page 5, line 1 - page 6, line 4; figure 1 * | 1,3,4, 6,9 | |
| A | US-A-4 312 183 (REGAR) <br> * Column 1, line 28 - column 4, line 14; figures 1,2 * | 1,3,6 | |

The present search report has been drawn up for all claims

| Place of search | Date of completion of the search | Examiner |
|---|---|---|
| THE HAGUE | 30-05-1983 | HAKHVERDI M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82